# EUROPEAN PATENT APPLICATION

(11) **EP 2 570 226 A1**
(43) Date of publication of application: **20.03.2013**
(21) Application number: 12182509.5
(22) Date of filing: 31.08.2012
(51) Int. Cl.: B23K 35/02

(54) **Welding pin and joining arrangement for the aligned joining of structural parts**

(30) Priority: 14.09.2011 DE 102011053596
(71) Applicant: Newfrey LLC, Newark, Delaware 19711 (US)
(72) Inventor: Willershausen, Jörg, 35394 Gießen (DE)
(74) Representative: Haar, Lucas Heinz Jörn

(57) **Abstract**

The invention relates to a welding pin (1) for the aligned joining of structural parts, having a shank (2) that has a flange (7), on one side of the flange (7) a welding end (3) and on the other side of the flange (7) a fastening section (5). The welding pin has a conical section (4), which is arranged between the flange (7) and the fastening section (5) and tapers in the direction of the fastening section (5).

The welding pin is suitable for a joining arrangement for the aligned joining of structural parts.

## Description

The invention relates to a welding pin for the aligned joining of structural parts, having a shank that has a flange, on one side of the flange a welding end and on the other side of the flange a fastening section. The invention in addition relates to a joining arrangement for the aligned joining of structural parts, wherein a first structural part has at least one welding pin welded by a welding end to the first structural part, which pin has a shank projecting from the first structural part, a flange arranged on the shank, and on the free shank end a fastening section, and at some distance from the welding pin has a contact surface extending in the longitudinal direction of the welding pin for a second structural part and the second structural part has a fastening opening for accommodation of the welding pin, a supporting surface capable of being applied to the flange and at some distance from the fastening opening a seating surface cooperating with the contact surface.

In automobile construction welding pins, which are welded to a structural part and engage in openings of one or more additional structural parts, frequently are used for joining structural parts which are then fixed to the welding pin by means of nuts or the like for joining the parts. In such joining operations, the problem often exists that the structural parts being joined together must be aligned, so that after joining, they assume a specified end position. This alignment is required in order to be able to compensate for dimensional discrepancies of the parts produced in production and lying within the limit of manufacturing tolerances of the parts and the means for their connection. For example, complicated measurement techniques or gauges are used for alignment of the structural parts. Both may result in the lengthening of joining times and hence in higher production costs.

GB 2 065 011 A discloses a pin for welding to a structural part, which has a cylindrical shank and a cone-shaped foot, the end of which, of greater diameter, is provided with an annular welding surface. There, the cone-shaped foot has the task of enlarging the diameter of the welding surface, so as to give the welded joint greater strength.

The object of the invention is to procure a welding pin and a joining arrangement of the kind mentioned at the beginning, by which the alignment of structural parts being joined is simplified and the time required for joining is reduced.

According to the invention, this object is accomplished by a welding pin having the features indicated in Claim 1 and a joining arrangement having the features indicated in Claim 3. Advantageous developments of the welding pin and the arrangement are indicated in the remaining claims.

According to the invention, the welding pin for the aligned joining of structural parts has a shank that has a flange, on one side of the flange a welding end and on the other side of the flange a fastening section, wherein between the flange and the fastening section a conical section is arranged which tapers in the direction of the fastening section.

The welding pin according to the invention has the advantage that, in the joining of such parts with the aid of its conical section, at least one structural part to be fastened can be aligned transverse to the longitudinal axis of the welding pin before it reaches its final fastening position on another structural part.

A joining arrangement according to the invention comprises a first structural part that has at least one welding pin welded by a welding end to the first structural part, which pin has a shank projecting from the first structural part, a flange arranged on the shank and, at the free shank end, a fastening section, and at some distance from the welding pin has a contact surface extending in the longitudinal direction of the welding pin for a second structural part, wherein the second structural part has a fastening opening for accommodation of the welding pin, a supporting surface capable of being applied to the flange and, at some distance from the fastening opening, a seating surface cooperating with the contact surface. The welding pin has adjacent to the side of the flange turned away from the welding end a conical section which tapers in the direction of the fastening section, and the fastening opening of the second structural part has on the supporting surface an inside diameter which corresponds to at least the greatest outside diameter of the conical section, and the second structural part has a region deformable by force, the deformation of which produces a reduction of the distance between the seating surface and the fastening opening.

The joining arrangement according to the invention has the advantage that mutual alignment of the structural parts to be joined takes place automatically upon assembly due to the conical section of the welding pin. Alignment with the aid of gauges or measurements and alignment by hand can be omitted. The risk of alignment errors in assembly is largely avoided.

According to the invention, the slope of the conical section, i.e., the difference between the greatest and the smallest radius of the conical section, can be adapted to the maximum manufacturing tolerances that may occur at the distances between the welding pin and the contact surface, on the one hand, and between the fastening opening and the seating surface, on the other. The design of the conical section of the welding pin thus permits, in simple fashion, adaptation of the joining arrangement to the manufacturing tolerances present in each case.

The fastening section of the welding pin preferably is cylindrical and provided with an external thread. The second structural part can therefore be pressed into the alignment position along the conical section by a nut screwed onto the fastening section and then clamped between the nut and the flange. The force required in alignment for deformation of the second structural part can therefore be applied indirectly by turning of the nut and requires no significant external force.

The welding pin preferably is welded to the first structural part so that the flange is arranged at some distance from the first structural part. Contact of the second structural part on the flange, which determines the fastening position of the second structural part on the welding pin, is thereby ensured.

The seating surface of the second structural part can rest directly on the contact surface of the first structural part, but it may alternatively be provided that between the seating surface and the contact surface, there is arranged a section of a third structural part, which is inserted in the joining operation.

The invention will be explained in detail below with reference to an exemplary embodiment represented in the drawing, wherein:
- Figure 1: shows a welding pin according to the invention,
- Figure 2: a joining arrangement according to the invention, and
- Figure 3: a cross section of the joining arrangement of Figure 2.

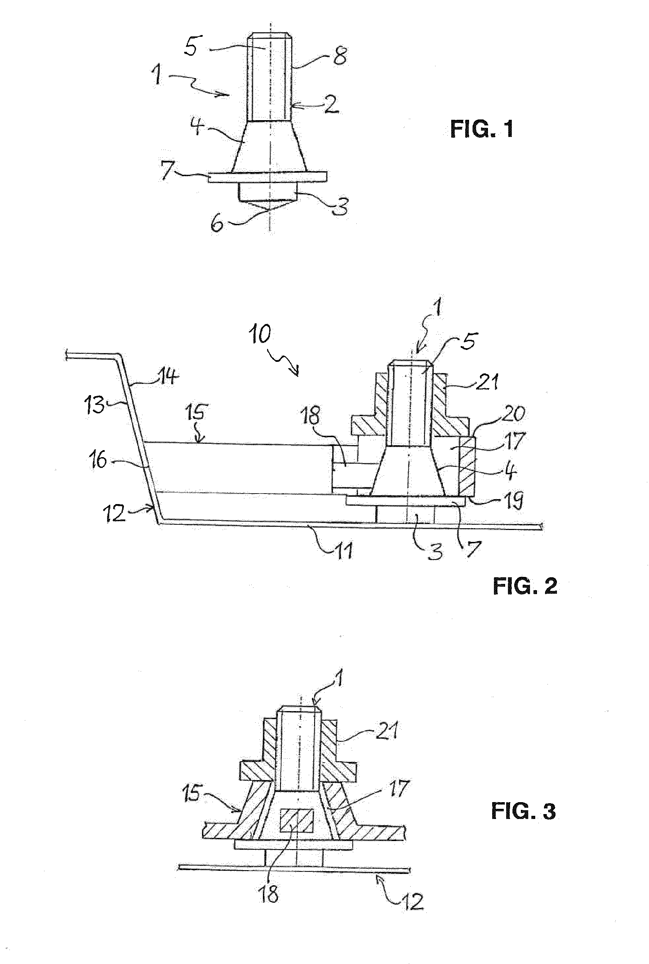

The welding pin 1 shown in Figure 1 has a shank 2, extending along an axis, which forms a welding end 3, a conical section 4 and a fastening section 5. The welding end 3 is cylindrical and has an ignition tip 6. A disk-like flange 7 is formed on the shank 2 between the welding end 3 and the conical section 4. The flange 7 with its side turned toward the conical section 4 forms a flat contact surface for a structural part to be fastened. The conical section 4 with its greatest outside diameter adjoins the flange 7 and tapers in the direction of the fastening section 5 all the way to the outside diameter of the latter. The fastening section 5 is cylindrical and has an external thread 8.

Figure 2 shows a joining arrangement 10 with a welding pin 1 of Figure 1. The welding pin 1 is welded by its welding end 3 to a plate-like flat section 11 of a first structural part 12 and projects substantially perpendicular from the section 11. At some distance from the welding pin 1, the first structural part 12 has a step 13, which forms a contact surface 14 extending beside the welding pin 1. The contact surface 14 is designed for the contact of a second structural part 15 and serves as a reference surface for positioning of the second structural part 15 with respect to the first structural part 12. The second structural part 15 has a seating surface 16 cooperating with the contact surface 14, which after joining should rest on the contact surface 14. For fastening to the welding pin 1, the second structural part 15 has an opening 17, in which the welding pin 1 engages. The opening 17 is limited in the direction of the seating surface 16 by an element 18, which by the action of a force in the direction of the seating surface 16 is deformable or displaceable with respect to the second structural part 15, so as to produce an enlargement of the diameter of the opening in this direction and hence a reduction in the distance between the element 18 and the seating surface 16. The second structural part 15, in a region surrounding the opening 17, in addition has a supporting surface 19, by which it is capable of being supported on the flange 7. On the side opposite the supporting surface 19, the structural part 15 has a contact surface 20 for a nut 21 screwed onto the welding pin 1.

For fastening of the second structural part 15 to the first structural part 12, the second part 15 is first roughly pre-aligned with respect to the first part 12 and slipped by the opening 17 onto the welding pin 1, whereupon the seating surface 16 rests on the contact surface 14 and the element 18 comes into contact with the conical section 4. If, in connection with the permissible manufacturing tolerances, the distance between the contact surface 14 and the welding pin 1 has a maximum value and the distance between the seating surface 16 and the element 18 has a minimum value, the structural part 15 is able to reach all the way to contact on the flange 7 without significant force, while the conical section 4, by contact with the element 18, provides that the seating surface 16 also rests on the contact surface. If, on the contrary, the distance between the contact surface 14 and the welding pin 1 is smaller than the maximum value and/or the distance between the seating surface 16 and the element 18 is greater than the minimum value of the respective tolerance, the element 18 comes into contact with the conical section 4 before the structural part 15 with its supporting surface 19 reaches the flange 7. Then, with the aid of the nut 21 screwed onto the welding pin 1, the structural part 15 can be pressed downward against the resistance of the element 18 all the way to contact on the flange 7. The element 18 is thereby forced against its resistance with respect to the structural part 15 in the direction of the seating surface 16, whereupon the seating surface 16 is firmly pressed onto the contact surface 14. In both of the cases described, the conical section 4 of the welding pin 1 thus causes the second structural part 15 to be positioned in the desired manner with respect to the first structural part 12 and fixing in the positioned position takes place.

## Claims

1. Welding pin (1) for the aligned joining of structural parts, having a shank (2) that has a flange (7), on one side of the flange (7) a welding end (3) and on the other side of the flange (7) a fastening section (5), **characterized by** a conical section (4), which is arranged between the flange (7) and the fastening section (5) and tapers in the direction of the fastening section (5).

2. Welding pin according to Claim 1, **characterized in that** the fastening section (5) is cylindrical and has an external thread (8).

3. Joining arrangement for the aligned joining of structural parts, wherein a first structural part (12) has at least one welding pin (1), welded by a welding end (3) to the first structural part, which welding pin (1) has a shank (2) projecting from the first structural part (12), a flange (7) arranged on the shank (2) and, at the free shank end, a fastening section (5), and at some distance from the welding pin (1) the first structural part (12) has, for contacting a second structural part (15), a contact surface (14) extending in the longitudinal direction of the welding pin (1), the second structural part (15) has a fastening opening (17) for accommodation of the welding pin (1), a supporting surface (19) capable of being applied to the flange (7) and, at some distance from the fastening opening (17), a seating surface (16) cooperating with the contact surface (14), **characterized in that** the welding pin (1) has a conical section (4) adjoining the side of the flange (7) turned away from the welding end and tapering in the direction of the fastening section (5), and **in that** the fastening opening (17) of the second structural part (15) has, on the supporting surface (19). an inside diameter which corresponds to at least the greatest outside diameter of the conical section (4), wherein the second structural part (15) has a region (18) deformable by force, the deformation of which produces a reduction of the distance between the seating surface (16) and the fastening opening (17).

4. Joining arrangement according to Claim 3, **characterized in that** the difference between the greatest and the smallest radius of the conical section (4) corresponds to the maximum manufacturing tolerances that may occur in the distances between the welding pin (1) and the contact surface (14), on the one hand, and/or between the fastening opening (17) and the seating surface (16), on the other.

5. Joining arrangement according to either of Claims 3 or 4, **characterized in that** the fastening section (5) of the welding pin (1) is cylindrical and has an external thread (8) and **in that** the second structural part (15) is clamped between a nut (21) screwed onto the fastening section (5) and the flange (7).

6. Joining arrangement according to any of Claims 3 to 5, **characterized in that** the flange (7) is arranged at some distance from the first structural part (12).

7. Joining arrangement according to any of Claims 3 to 6, **characterized in that** the seating surface (16) rests on the contact surface (14).

8. Joining arrangement according to any of Claims 3 to 7, **characterized in that** a section of a third structural part is arranged between the seating surface (16) and the contact surface (14).
